# EUROPÄISCHE PATENTSCHRIFT

(11) **EP 2 752 326 B1**
(45) Veröffentlichungstag und Bekanntmachung des Hinweises auf die Patenterteilung: **04.03.2015**
(21) Anmeldenummer: 13191493.9
(22) Anmeldetag: 05.11.2013
(51) Int. Cl.: B60K 15/03, B60K 15/04, B60K 15/035

(54) **Befüllkopf**
Filling head
Tête de remplissage

(30) Priorität: 07.01.2013 DE 102013100076
(43) Veröffentlichungstag der Anmeldung: 09.07.2014
(73) Patentinhaber: VERITAS AG, 63571 Gelnhausen (DE)
(72) Erfinder: Netzer, Heribert, 63457 Hanau (DE); Groß, Michael, 61203 Reichelsheim (DE)
(74) Vertreter: Klinski, Robert

(56) Entgegenhaltungen:
- EP-A1- 0 636 505
- DE-U1-202008 001 586
- JP-A- 2009 113 657
- US-A- 5 606 954
- US-A1- 2004 239 010
- US-A1- 2009 084 464

## Beschreibung

Die vorliegende Erfindung betrifft einen Befüllkopf für einen Flüssigkeitstank in einem Kraftfahrzeug.

Während der Betankung eines Flüssigkeitstanks in einem Fahrzeug kann Flüssigkeit aus einem Befüllkopf austreten und das Äußere des Fahrzeugs oder die Umwelt verschmutzen. Daher sollte ein Austritt von Flüssigkeit verhindert werden. Bei der Betankung eines Flüssigkeitstanks (SCR-Tank) mit einer wässrigen Harnstofflösung ist es darüber hinaus nötig, den Flüssigkeitstank mit den im Feld vorhandenen Zapfsystemen mit einer Befüllgeschwindigkeit von bis zu 40l/min zu betanken, ohne das die Flüssigkeit austritt. In diesem Fall sollte ebenfalls ein Austreten der Flüssigkeit beim Nachtanken verhindert werden und eine Betankung mit einer aufgeschraubten Nachfüllflasche (Kruse-Flasche) oder einem Adapter für einen 5L-Kanister möglich sein.

Die Druckschrift DE 10 2011 009 745 A1 beschreibt in diesem Zusammenhang einen Einfüllstutzen für einen Nebenflüssigkeitsbehälter für ein Kraftfahrzeug.

Die Druckschrift JP 2009 113 657 A, die die Merkmale des Oberbegriffs von Anspruch 1 beinhaltet, beschreibt eine Kraftstofffüllvorrichtung, in der ein Pistolenführungselement angeordnet und an einem Einfüllstutzen angebracht ist. Eine Belüftungsöffnung des Pistolenführungselement ist an einer Position versetzt zu einer Achsenverlängerungslinie einer Entlüftungsleitung angeordnet.

Die Druckschrift US 2009/084464 A1 beschreibt einen Einfüllstutzen, der einen Halsrohrkörper mit einem Kraftstoffdurchgang, ein Führungsglied zum Führen einer Kraftstoffpistole und einen Rückführkanal umfasst, der den Kraftstofftank und den Halsrohrkörper durch einen Durchgang getrennt von der Kraftstoffleitung verbindet.

Es ist die der Erfindung zugrundeliegende Aufgabe, einen verbesserten Befüllkopf anzugeben, mit dem das Austreten von Flüssigkeit beim Be- oder Nachtanken auch bei einer hohen Befüllrate wirksam verhindert werden kann.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Befüllkopf für einen Flüssigkeitstank in einem Kraftfahrzeug mit einem Gehäuse gelöst, das ein erstes Gehäuseformteil, in dem ein Tankentlüftungsstutzen zum Einleiten von Luft in das Gehäuse gebildet ist; und ein zweites Gehäuseformteil umfasst, in dem ein Tauchrohr zum Führen eines Flüssigkeitsstrahles im Inneren des Befüllkopfes gebildet ist, wobei das Tauchrohr eine Entlüftungsöffnung zum Ausleiten der durch den Tankentlüftungsstutzen eingeleiteten oder einleitbaren Luft aus dem Befüllkopf und ein modulares, ringförmiges Schwallelement umfasst, das auf das Tauchrohr aufsetzbar ist. Die Entlüftungsöffnung ist beispielsweise ein Entlüftungsloch. Die Flüssigkeit ist beispielsweise eine wässrige Harnstofflösung. Dadurch wird beispielsweise der technische Vorteil erreicht, dass das Tauchrohr durch Aufsetzen von Schwallelementen mit unterschiedlichen Abmessungen modular an unterschiedliche untere Gehäuseformteile angepasst ist und somit ein modulares Baukastensystem realisiert wird.

Durch den Befüllkopf werden hohe Befüllraten des Flüssigkeitstanks ermöglicht, ohne dass es zu einem Austritt von Flüssigkeit kommt. Gegenüber der Verwendung eines Ringspaltes ergibt sich durch die in dem Tauchrohr angeordnete Entlüftungsöffnung der Vorteil, dass der Befüllkopf derart ausgerichtet werden kann, dass sich die Entlüftungsöffnung an der höchsten Stelle im Inneren des Befüllkopfes befindet. Selbst falls eine Flüssigkeit in den Befüllkopf eintreten sollte und sich in den tiefer gelegenen Bereichen des Befüllkopfes sammelt, kann ein Austritt dieser Flüssigkeit möglichst lange verhindert werden.

In einer vorteilhaften Ausführungsform des Befüllkopfes ist die Entlüftungsöffnung des Tauchrohrs eine im Querschnitt kreisförmige Aussparung. Dadurch wird beispielsweise der technische Vorteil erreicht, dass sich die Entlüftungsöffnung auf einfache Weise im Tauchrohr bilden lässt und durch die Entlüftungsöffnung beim Ausströmen von Luft ein turbulenzfreier Luftstrom entsteht.

In einer weiteren vorteilhaften Ausführungsform des Befüllkopfes ist die Entlüftungsöffnung des Tauchrohrs im Bereich einer oberen Gehäusewand angeordnet. Dadurch wird beispielsweise der technische Vorteil erreicht, dass ein Austreten von Flüssigkeit, die sich möglicherweise im unteren Bereich der Befüllkopfkammer gesammelt hat, durch die Entlüftungsöffnung verhindert wird.

In einer weiteren vorteilhaften Ausführungsform des Befüllkopfes ist das Tauchrohr in Form eines Zylinders gebildet. Dadurch wird beispielsweise der technische Vorteil erreicht, dass eine gute Führungswirkung und ein laminarer oder turbulenzfreier Strömungsfluss beim Einfüllen der Flüssigkeit erzielt werden.

In einer weiteren vorteilhaften Ausführungsform des Befüllkopfes umfasst das Tauchrohr an einer Innenseite ein Abstandselement zum Erzeugen eines Entlüftungskanals im Bereich der Entlüftungsöffnung. Dadurch wird beispielsweise der technische Vorteil erreicht, dass ein Verschluss der Entlüftungsöffnung durch eine im Bereich der Entlüftungsöffnung aufliegende Zapfpistole verhindert wird.

In einer weiteren vorteilhaften Ausführungsform des Befüllkopfes ist das Abstandselement durch eine Abstandsrippe gebildet, die in Längsrichtung des Tauchrohrs verläuft. Dadurch wird beispielsweise der technische Vorteil erreicht, dass der laminare oder turbulenzfreie Strömungsfluss beim Strömen der Flüssigkeit durch das Tauchrohr nicht gestört wird.

In einer weiteren vorteilhaften Ausführungsform des Befüllkopfes ist in der Abstandsrippe ein Anschlag für ein Zapfventil gebildet. Dadurch wird beispielsweise der technische Vorteil erreicht, dass das Zapfventil nur bis zu einer vorgegebenen Position im Inneren des Befüllkopfes eingeführt werden kann und sich der Auslass des Zapfventils an einem vorgegebenen Ort befindet.

In einer weiteren vorteilhaften Ausführungsform des Befüllkopfes ist der Anschlag in der Abstandsrippe unterhalb der Entlüftungsöffnung des Tauchrohres angeordnet. Dadurch wird beispielsweise der technische Vorteil erreicht, dass beim Betanken die Luftströmung durch die Entlüftungsöffnung durch innerhalb des Tauchrohrs an der Entlüftungsöffnung vorbeiströmende Luft erhöht wird, beispielsweise durch einen Venturi-Effekt. Durch die Flüssigkeitsströmung beim Betanken entsteht beispielsweise ein Sog, der die Luftströmung durch die Entlüftungsöffnung erhöht.

In einer weiteren vorteilhaften Ausführungsform des Befüllkopfes ist der Tankentlüftungsstutzen parallel zum Tauchrohr angeordnet. Dadurch wird beispielsweise der technische Vorteil erreicht, dass der Befüllkopf besonders raumsparend gestaltet ist und seitlich wegstehende Anschlüsse vermieden werden.

In einer weiteren vorteilhaften Ausführungsform des Befüllkopfes ist der Tankentlüftungsstutzen in der Nähe der Entlüftungsöffnung des Tauchrohrs angeordnet.

Dadurch wird beispielsweise der technische Vorteil erreicht, dass ein leichter und strömungstechnisch kurzer Übergang beim Entlüften erzielt wird.

In einer weiteren vorteilhaften Ausführungsform des Befüllkopfes ist in dem zweiten Gehäuseformteil eine Schwallwand gebildet, die zwischen einem Auslass des Tankentlüftungsstutzens und der Entlüftungsöffnung angeordnet ist. Dadurch wird beispielsweise der technische Vorteil erreicht, dass ein Übertritt von Flüssigkeit in den Tankentlüftungsstutzen erschwert wird und eine Blasen- oder Schaumbildung im Inneren des Befüllkopfes verhindert wird.

In einer weiteren vorteilhaften Ausführungsform des Befüllkopfes ist die Schwallwand parallel zur Längsrichtung des Füllrohrs oder des Einfüllstutzens angeordnet. Dadurch wird beispielsweise ebenfalls der technische Vorteil erreicht, dass sich ein turbulenzfreier Strömungsfluss um die Schwallwand herum ergibt.

In einer weiteren vorteilhaften Ausführungsform des Befüllkopfes umfasst das Tauchrohr an einer Außenseite eine Aussparung zum Aufsetzen eines modularen, ringförmigen Schwallelementes auf das Tauchrohr. Dadurch wird beispielsweise der technische Vorteil erreicht, dass auf einfache Weise ein modulares Schwallelement am unteren Ende des Tauchrohrs montiert werden kann.

In einer weiteren vorteilhaften Ausführungsform des Befüllkopfes umfasst das Tauchrohr an der Außenseite Längsrippen zum Bilden eines Anschlags für das aufgesetzte Schwallelement. Dadurch wird beispielsweise der technische Vorteil erreicht, dass sich die Halterung des Schwallelementes verbessert und an dem Schwallelement auftretende Kräfte besser auf das Tauchrohr übertragen werden können.

In einer weiteren vorteilhaften Ausführungsform des Befüllkopfes umfasst das zweite Gehäuseformteil an einer Innenseite zumindest ein Fixierungselement zum Fixieren des eingesetzten, ringförmigen Schwallelementes. Dadurch wird beispielsweise der technische Vorteil erreicht, dass bei einem Zusammensetzen des Gehäuses gleichzeitig das Schwallelement fixiert wird.

Ausführungsbeispiele der Erfindung sind in den Zeichnungen dargestellt und werden im Folgenden näher beschrieben.

Es zeigen:
Fig. 1 eine perspektivische Außenansicht eines Befüllkopfes;
Fig. 2 eine Querschnittsansicht des Befüllkopfes;
Fig. 3 eine vergrößerte Querschnittsansicht des Befüllkopfes;
Fig. 4 eine weitere Querschnittsansicht des Befüllkopfes; und
Fig. 5 eine Innenansicht des Befüllkopfes mit einem modular aufsetzbaren Schwallelement.

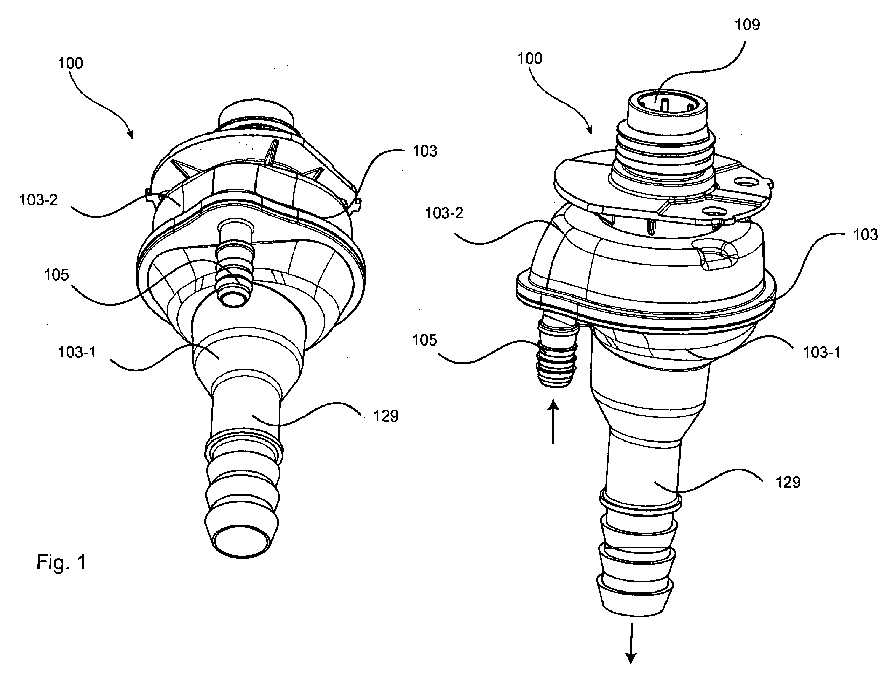

Fig. 1 zeigt eine perspektivische Außenansicht eines Befüllkopfes 100 mit einem Gehäuse 103, das aus einem ersten Gehäuseformteil 103-1 und einem zweiten Gehäuseformteil 103-2 zusammengesetzt ist. Durch den Befüllkopf 100 wird die sachgerechte Belüftung einer Flasche und des Kanisters beim Betanken auch bei hohen Befüllraten sichergestellt und das Austreten der Flüssigkeit aus einer Betankungsöffnung 109 verhindert. Eine verdrängte Luft aus dem Flüssigkeitstank wird in den Befüllkopf 100 eingeleitet. Die eingeleitete Luft wird in dem Befüllkopf 100 von der Flüssigkeit separiert, damit diese keine Flüssigkeit mitreißt und dann aus dem Befüllkopf 100 in Richtung eines Bedieners austreten oder entweichen kann.

Zum Betanken wird ein Zapfventil in die Betankungsöffnung 109 des Befüllkopfes 100 gesteckt und betätigt. Die Flüssigkeit fließt dann aus dem Zapfventil über den Befüllkopf 100 in den nicht gezeigten Flüssigkeitstank.

Im unteren Gehäuseformteil 103-1 ist ein Auslassstutzen 129 gebildet, durch den beim Betanken die Flüssigkeit in den Flüssigkeitstank in Richtung des Flüssigkeitstanks fließt. Zu diesem Zweck ist an dem Auslassstutzen 129 beispielsweise ein nicht gezeigter Schlauch oder eine Flüssigkeitsleitung zu dem Flüssigkeitstank aufgesteckt. Weiter ist in dem unteren Gehäuseformteil 103-1 ein Tankentlüftungsstutzen 105 gebildet, in den Luft eingeleitet wird, die beim Tanken von der Flüssigkeit in dem Flüssigkeitstank verdrängt wird, damit diese dann über die Betankungsöffnung 109 des Befüllkopfes 100 ausgeleitet werden kann.

Zu diesem Zweck ist beispielsweise ein nicht gezeigter Entlüftungsschlauch an dem Tankentlüftungsstutzen 105 angeschlossen. Die Betankungsöffnung 109 ist derart gestaltet, dass bei eingesetztem Zapfventil ein Entlüftungskanal um das Zapfventil herum entsteht. Dies wird beispielsweise durch ein im Inneren der Betankungsöffnung 109 umlaufendes Nutprofil erreicht. Der Entlüftungskanal im Inneren des Befüllkopfes 100 ist derart gestaltet, dass selbst bei einer Befüllrate der Flüssigkeit von 40L/min ebenfalls Luft mit einer Rate von 40L/min durch den Befüllkopf 100 entweichen kann.

Der Tankentlüftungsstutzen 105 erstreckt sich in der gleichen Richtung wie der Auslassstutzen 129, so dass ein raumsparender Einbau des Befüllkopfes 100 innerhalb des Fahrzeuges ermöglicht wird. Anschlussleitungen für den Tankentlüftungsstutzen 105 und den Auslassstutzen 129 können dann von der gleichen Richtung her aufgesteckt werden.

Die Gehäuseformteile 103-1 und 103-2 sind beispielsweise Kunststoff- oder Spritzgussformteile aus Polyamid (PA), Polyoxymethylen (POM), Polyolefin oder thermoplastischen Elastomeren auf Olefinbasis (TPO). Die Fertigung der Gehäuseformteile 103-1 und 103-2 aus diesen Materialien ist besonders vorteilhaft, da hierdurch eine hohe Festigkeit und Stabilität des Befüllkopfes 100 erreicht wird.

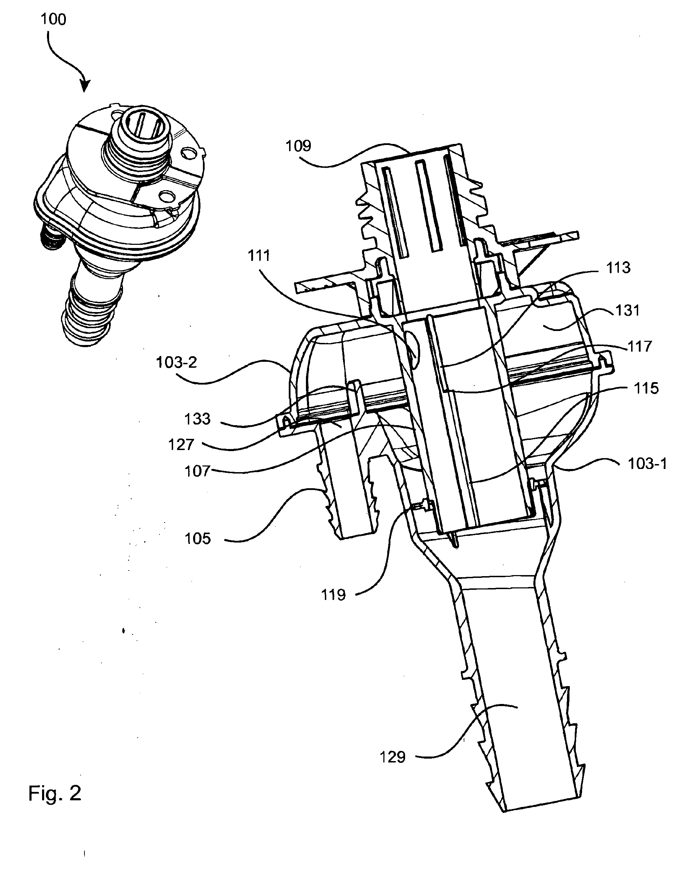

Fig. 2 zeigt eine Querschnittsansicht des Befüllkopfes 100. Im oberen Gehäuseformteil 103-2 ist ein Tauchrohr 107 gebildet, das das Zapfventil aufnimmt, positioniert und den Strahl der eingefüllten Flüssigkeit lenkt. Das Tauchrohr 107 weist eine zylindrische Grundform auf und ragt in eine im Inneren des Gehäuses 103 gebildete Befüllkopfkammer 131 hinein. Das Tauchrohr 107 ist ein integraler Bestandteil des oberen Gehäuseformteils 103-2.

Beim Betanken strömt die verdrängte Luft über den Tankentlüftungsstutzen 105 in die druckdichte Befüllkopfkammer 131 ein und verursacht im Inneren der Befüllkopfkammer 131 einen leichten Überdruck. Dieser Überdruck wirkt als Luftpolster und drückt Flüssigkeit, die sich möglicherweise im Befüllkopf 100 befindet, in Richtung des Auslassstutzens 129. Der Einfüllstuten weist beispielsweise einen Innendurchmesser von 11 mm bis 12 mm auf.

Damit die eingeleitete Luft aus der Befüllkopfkammer 131 entweichen kann ist in dem Tauchrohr 107 eine Entlüftungsöffnung 111 zum Ausleiten der durch den Tankentlüftungsstutzen 105 eingeleiteten Luft angeordnet. Die Größe der Entlüftungsöffnung 111 ist derart gewählt, dass weder ein Rückstau an Luft entsteht und es aufgrund von in die Befüllkopfkammer 131 eindringender Flüssigkeit zu einer Frühabschaltung der Zapfpistole kommt, noch dass Flüssigkeit aus dem Befüllkopf 100 austreten kann. Die Position der Entlüftungsöffnung 111 ist derart gewählt, dass zum einen Luft solange wie möglich entweichen kann und zum anderen ein Austritt von Flüssigkeit verhindert werden kann. Dementsprechend sind Position, Höhe, Breite der Entlüftungsöffnung 111 aufeinander abgestimmt.

Die Entlüftungsöffnung 111 ist beispielsweise durch eine kreisförmige Aussparung in dem Tauchrohr 107 gebildet, die einen Durchmesser von 6 mm bis 10 mm, vorzugsweise 8 mm, aufweist. Die Entlüftungsöffnung 111 ist in einem oberen Bereich des Tauchrohrs 107 in der Nähe einer Gehäusewand oder an einem Rand der Befüllkopfkammer 131 gebildet. Dadurch kann Flüssigkeit in der Befüllkopfkammer 131 aufsteigen, während die durch den Tankentlüftungsstutzen 105 eingeführte Luft möglichst lange durch die Entlüftungsöffnung 111 entweicht.

Der Befüllkopf 100 kann beim Einbau in ein Kraftfahrzeug derart ausgerichtet werden, dass sich die Entlüftungsöffnung 111 an der höchsten Stelle im Inneren des Befüllkopfes 100 befindet. Selbst falls eine Flüssigkeit in den Befüllkopf 100 eintreten sollte und sich in den tiefer gelegenen Bereichen der Befüllkopfkammer 131 sammelt, kann ein Austritt dieser Flüssigkeit verhindert werden.

An der Innenseite des Tauchrohrs 107 sind im Bereich der Entlüftungsöffnung 111 Abstandselemente 113 gebildet, die zwischen einem eingesetzten Zapfventil und der Entlüftungsöffnung 111 einen Spalt erzeugen, durch den die Luft hindurchtreten kann. Die Abstandselemente 113 verhindern, dass die Wandung des Zapfventils die Entlüftungsöffnung 111 blockiert und stellen sicher, dass im Inneren des Tauchrohrs ein Entlüftungskanal gebildet wird. Außerdem wird mittels der Abstandselemente 113 eine Zentrierung des eingesetzten Zapfventils sichergestellt.

Die Abstandselemente 113 sind als in Strömungs- oder Längsrichtung im Inneren des Tauchrohrs 107 verlaufende Abstandsrippen 115 gebildet. Durch diese Form der Abstandselemente 113 wird nicht nur ein Entlüftungskanal im Bereich der Entlüftungsöffnung 111 gebildet, sondern es wird auch eine zusätzliche Führung des Flüssigkeitsstromes im Inneren des Tauchrohres 107 erzielt. Dadurch können Verwirbelungen oder Turbulenzen beim Betanken des Flüssigkeitstanks mit Flüssigkeit im Inneren des Befüllkopfes 100 verhindert werden.

Damit das Zapfventil an einer vorgegebenen Position im Inneren des Tauchrohrs 107 positioniert wird, ist in den Abstandrippen 115 ein Anschlag 117 gebildet, der ein Tieferrutschen des Zapfventils verhindert. Der Anschlag 117 ist in Richtung der Flüssigkeitsströmung unterhalb der Entlüftungsöffnung 111 gebildet.

Der Tankentlüftungsstutzen 105 verläuft parallel zum Tauchrohr 107 und zum Auslassstutzen 129. Der Auslass 127 des Tankentlüftungsstutzens 105 liegt in der Nähe der Entlüftungsöffnung 111, die im Tauchrohr 107 gebildet ist. Dadurch kann strömungstechnisch ein kurzer Pfad beim Ausleiten der Luft aus der Befüllkopfkammer 131 realisiert werden.

Am unteren Ende des Tauchrohrs 107 ist ein Schwallelement 119 angeordnet, das eine zurückströmende Flüssigkeit abbremst und verhindert, dass die Befüllkopfkammer 131 des Befüllkopf 100 vollständig geflutet wird. Daneben ermöglicht das Schwallelement 119, dass beim Nachtanken der restliche Raum des Befüllkopfes 100 für die Aufnahme der Restmenge verwendet werden kann. Das Schwallelement 119 ist als separates Teil an dem Tauchrohr 107 im Befüllkopf 100 befestigt. Somit ist es möglich die Abstimmung auf verschiedene Tanksysteme vorzunehmen und ein Baukastensystem zu erstellen.

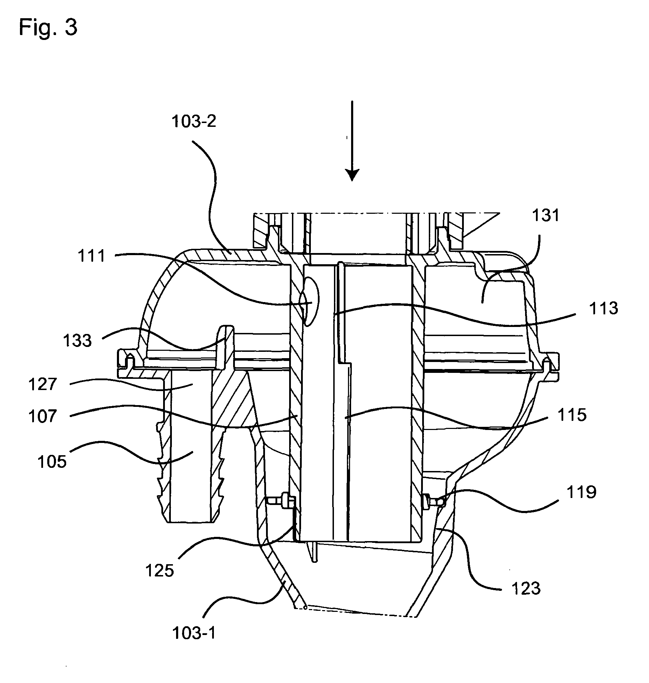

Fig. 3 zeigt eine vergrößerte Querschnittsansicht des Befüllkopfes 100. Der Einfüllstutzen 105 ist an der gleichen Seite des Befüllkopfes 100 wie die Entlüftungsöffnung 111 innerhalb des Tauchrohrs 107 angeordnet, so dass sich ein geringer Strömungswiderstand ergibt. Die Position des Tankentlüftungsstutzens 105 liegt im oberen Bereich des Gehäuses 103 und ist so hoch wie möglich gewählt. Die Lage des Tankentlüftungsstutzens 105 ist somit auf die Position der Entlüftungsöffnung 111 abgestimmt.

In dem unteren Gehäuseformteil 103-1 ist an der Innenseite ein Fixierungselement 123 zum Fixieren des eingesetzten, ringförmigen Schwallelementes 119 gebildet. Beim Zusammensetzen des oberen Gehäuseformteils 103-2 und des unteren Gehäuseformteils 103-1 liegt das Fixierungselement 123 an der Unterseite des Schwallelementes 119 an, so dass das Schwallelement 119 in seiner Position gehalten wird. Das Fixierungselement 123 ist ein integraler Bestandteil des unteren Gehäuseformteils 103-1.
Im Tauchrohr 107 ist an der Unterseite eine Aussparung 125 gebildet, in die eine Nabe des Schwallelementes 119 eingesetzt wird. Dadurch wird ein Steckmechanismus zum Aufstecken des Schwallelementes 119 auf das Tauchrohr 107 realisiert.

In dem unteren Gehäuseformteil 103-1 ist zusätzlich eine Schwallwand 133 gebildet, die zwischen dem Auslass 127 des Tankentlüftungsstutzens 105 und der Entlüftungsöffnung 111 angeordnet ist. Die Schwallwand 133 verläuft in Richtung des Einfüllstutzens 105, so dass einströmende Luft von dieser nicht abgelenkt wird. Durch die Schwallwand 133 wird eine Durchmischung von Luft und Flüssigkeit im Bereich des Tankentlüftungsstutzens 105 im Befüllkopf 100 verhindert. Dadurch wird die Bildung von Schaum und Blasen in der Befüllkopfkammer 131 unterdrückt.

Die Abstandsrippe 115 erstreckt sich in Strömungsrichtung der Flüssigkeit im Inneren des Tauchrohrs 107 und prägt der Flüssigkeitsströmung beim Einfüllen einen laminaren oder turbulenzfreien Fluss auf. Dadurch lassen sich Verwirbelungen oder Turbulenzen im Inneren des Befüllkopfes 100 verhindern.

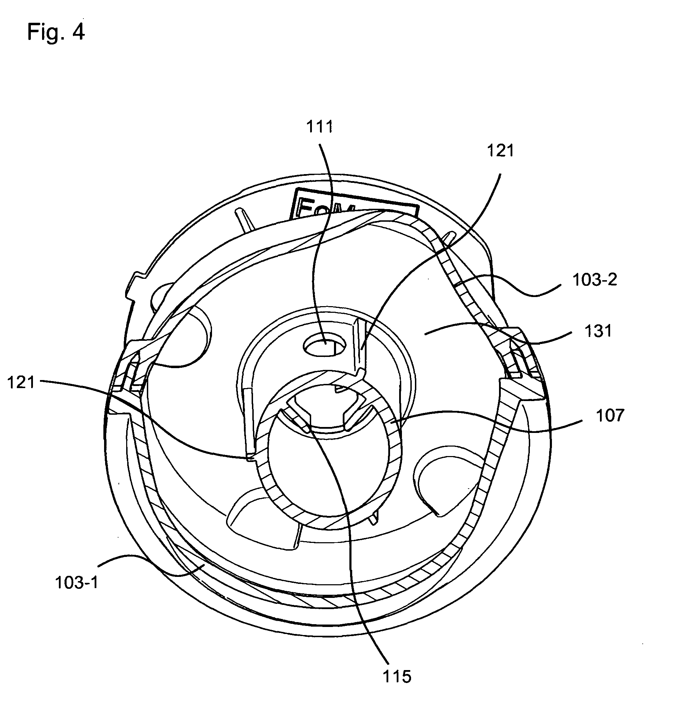

Fig. 4 zeigt eine weitere Querschnittsansicht des Befüllkopfes 100. An der Außenseite des Tauchrohrs 107 sind drei Längsrippen 121 die sich entlang des Tauchrohrs 107 erstrecken und als zusätzlicher Anschlag und Sicherung beim Einsetzen des Schwallelementes 119 dienen. Kräfte, die auf das Schwallelement 119 wirken, lassen sich durch die Längsrippen 121 auf das Tauchrohr 107 übertragen, so dass sich die Gesamtstabilität verbessert.

Zusätzlich wird durch die Längsrippen 121 die Stabilität des Tauchrohrs 107 verbessert. Die Wandstärke des Tauchrohrs 107 beträgt beispielsweise zwischen 2 mm und 3 mm.

Die Abstandsrippen 115 ragen radial im unteren Teil des Tauchrohrs 107 in das Innere des zylindrischen Tauchrohrs 107 hinein und dienen im oberen Teil des Tauchrohrs 107 zu Beabstandung des eingesetzten Zapfventils von der Entlüftungsöffnung 111, so dass sich zwischen dem Zapfventil und dem Tauchrohr 107 im Bereich der Entlüftungsöffnung 111 ein Entlüftungskanal ergibt.

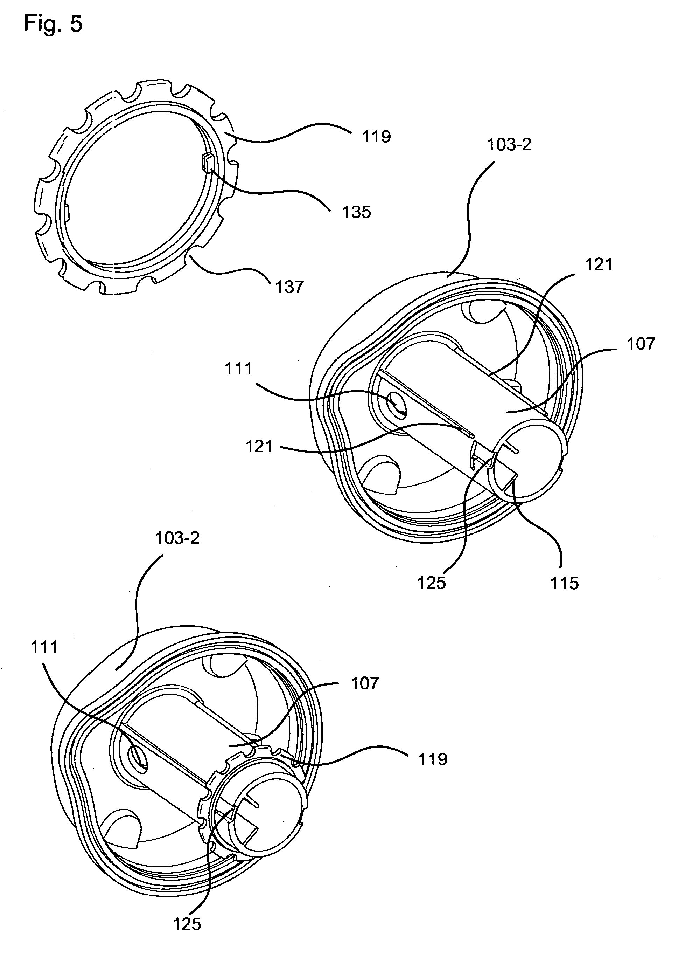

Fig. 5 zeigt ein modulares Schwallelement 119, eine Innenansicht des oberen Gehäuseformteils 103-2 des Befüllkopfes 100 und eine Innenansicht des oberen Gehäuseformteils 103-2 mit eingesetztem Schwallelement 119.

Das modulare Schwallelement 119 ist in Form einer Ringscheibe gebildet und erstreckt sich zwischen der Außenseite des Tauchrohrs 107 und der Innenseite des unteren Gehäuseformteils 103-2. Das Schwallelement 119 verhindert, dass die Befüllkopfkammer 131 des Befüllkopf 100 durch eine zurückströmende Flüssigkeit vollständig geflutet wird. Das Schwallelement 119 ist beispielsweise ein Kunststoffformteil. Das Schwallelement 119 umfasst halbkreisförmige Schwallöffnungen 137 in Form von Aussparungen, die einen partiellen Durchtritt der Flüssigkeit in die Befüllkopfkammer 131 zulassen. Die Schwallöffnungen 137 sind entlang des Umfangs der Ringscheibe gebildet.

An der Innenseite der Ringscheibe sind zwei vorspringende Naben 135 gebildet, die beim Aufsetzen des Schwallelementes 119 auf das Tauchrohr 107 in die korrespondierenden Aussparungen 125 eingeführt werden. Dadurch kann die Lage und die Position des Schwallelementes 119 auf dem Tauchrohr 107 exakt definiert werden. Zudem werden über die Naben 135 Kräfte, die auf das Schwallelement 119 wirken, auf das Tauchrohr 107 übertragen.

Die Aussparung 125 ist am unteren Ende des Tauchrohrs 107 gebildet und ermöglicht ein Aufsetzen des Schwallelementes 119 in Längsrichtung. Zusätzlich ist die Aussparung 125 derart gebildet, dass das Schwallelement 119 nach dem Einsetzen in die Aussparung 125 durch eine Drehung an dem Tauchrohr 107 fixiert werden kann. Die Aussparung 125 kann derart gestaltet sein, dass eine Befestigung des Schwallelementes 119 an dem Tauchrohr 107 in der Art eines Bajonettverschlusses erreicht wird. Weiter kann in der Aussparung 125 ein Rastsystem vorgesehen sein, das ein Lösen des Schwallelementes 119 verhindert und die Montagestellung des modularen Schwallelementes 119 verhindert.

An der Außenseite des Tauchrohrs 107 sind Längsrippen 121 gebildet, auf denen das Schwallelement 119 in montierten Zustand aufliegt. Dadurch wird das Schwallelement 119 zusätzlich in seiner Lage stabilisiert und unterstützt, so dass ein Verrutschen des Schwallelementes 119 im Inneren des Befüllkopfes 100 verhindert werden kann.

Wird das untere Gehäuseformteil 103-1 mit dem oberen Gehäuseformteil 103-2 verbunden, findet eine zusätzliche Sicherung und Stabilisierung des Schwallelementes 119 über die in dem unteren Gehäuseformteil 103-1 vorgesehenen Fixierungselemente 123 statt.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Befüllkopf
- 103: Gehäuse
- 103-1: Gehäuseformteil
- 103-2: Gehäuseformteil
- 105: Tankentlüftungsstutzen
- 107: Tauchrohr
- 109: Betankungsöffnung
- 111: Entlüftungsöffnung
- 113: Abstandselement
- 115: Abstandsrippe
- 117: Anschlag
- 119: Schwallelement
- 121: Längsrippe
- 123: Fixierungselement
- 125: Aussparung
- 127: Auslass
- 129: Auslassstutzen
- 131: Befüllkopfkammer
- 133: Schwallwand
- 135: Nabe
- 137: Schwallöffnung

## Patentansprüche

1. Befüllkopf (100) für einen Flüssigkeitstank in einem Kraftfahrzeug mit einem Gehäuse (103), mit:
einem ersten Gehäuseformteil (103-1), in dem ein Tankentlüftungsstutzen (105) zum Einleiten von Luft in das Gehäuse (103) gebildet ist; und
einem zweiten Gehäuseformteil (103-2), in dem ein Tauchrohr (107) zum Führen eines Flüssigkeitsstrahles im Inneren des Befüllkopfes (100) gebildet ist, wobei das Tauchrohr (107) eine Entlüftungsöffnung (111) zum Ausleiten der durch den Tankentlüftungsstutzen (105) einleitbaren Luft aus dem Befüllkopf (100) umfasst, **dadurch gekennzeichnet, dass** das Tauchrohr (107) ein modulares, ringförmiges Schwallelement (119) umfasst, das auf das Tauchrohr (107) aufsetzbar ist.

2. Befüllkopf (100) nach Anspruch 1, wobei die Entlüftungsöffnung (111) des Tauchrohrs (107) eine im Querschnitt kreisförmige Aussparung ist oder umfasst.

3. Befüllkopf (100) nach einem der vorangehenden Ansprüche, wobei die Entlüftungsöffnung (111) des Tauchrohrs (107) im Bereich einer oberen Gehäusewand angeordnet ist.

4. Befüllkopf (100) nach einem der vorangehenden Ansprüche, wobei das Tauchrohr (107) in Form eines Zylinders gebildet ist.

5. Befüllkopf (100) nach einem der vorangehenden Ansprüche, wobei das Tauchrohr (107) an einer Innenseite ein Abstandselement (113) zum Erzeugen eines Entlüftungskanals im Bereich der Entlüftungsöffnung (111) umfasst.

6. Befüllkopf (100) nach Anspruch 5, wobei das Abstandselement (113) durch eine Abstandsrippe (115) gebildet wird, die in Längsrichtung des Tauchrohrs (107) verläuft.

7. Befüllkopf (100) nach Anspruch 6, wobei in der Abstandsrippe (115) ein Anschlag (117) für ein Zapfventil gebildet ist.

8. Befüllkopf (100) nach Anspruch 7, wobei der Anschlag (117) in der Abstandsrippe (115) unterhalb der Entlüftungsöffnung (111) des Tauchrohres (107) angeordnet ist.

9. Befüllkopf (100) nach einem der vorangehenden Ansprüche, wobei der Tankentlüftungsstutzen (105) parallel zum Tauchrohr (107) verläuft.

10. Befüllkopf (100) nach einem der vorangehenden Ansprüche, wobei der Tankentlüftungsstutzen (105) in der Nähe der Entlüftungsöffnung (111) des Tauchrohres (107) angeordnet ist.

11. Befüllkopf (100) nach einem der vorangehenden Ansprüche, wobei in dem ersten Gehäuseformteil (103-1) eine Schwallwand (133) gebildet ist, die zwischen einem Auslass (127) des Tankentlüftungsstutzens (105) und der Entlüftungsöffnung (111) angeordnet ist.

12. Befüllkopf (100) nach Anspruch 1, wobei das Tauchrohr (107) an einer Außenseite eine Aussparung (125) zum Aufsetzen des modularen, ringförmigen Schwallelementes (119) auf das Tauchrohr (107) umfasst.

13. Befüllkopf (100) nach Anspruch 12, wobei das Tauchrohr (107) an der Außenseite Längsrippen (121) zum Bilden eines Anschlags für das befestigte Schwallelement (119) umfasst.

14. Befüllkopf (100) nach Anspruch 12 oder 13, wobei das erste Gehäuseformteil (103-1) an einer Innenseite zumindest ein Fixierungselement (123) zum Fixieren des eingesetzten, ringförmigen Schwallelementes (119) umfasst.

## Claims

1. Filling head (100) for a liquid tank in a motor vehicle having a housing (103), which includes:
a first molded housing part (103-1), in which a tank vent pipe (105) is formed for introducing air into the housing (103); and
a second molded housing part (103-2), in which a dip tube (107) is formed for guiding a jet of liquid in the interior of the filling head (100), wherein the dip tube (107) includes a vent opening (111) for discharging from the filling head (100) the air that may be introduced through the tank vent pipe (105), **characterized in that** the dip tube (107) includes a modular, annular surge element (119), which is attachable to the dip tube (107).

2. The filling head (100) according to claim 1, wherein the vent opening (111) of the dip tube (107) is or comprises an opening of circular cross-section.

3. The filling head (100) according to one of the preceding claims, wherein the vent opening (111) of the dip tube (107) is situated in the area of an upper housing wall.

4. The filling head (100) according to one of the preceding claims, wherein the dip tube (107) is formed in the form of a cylinder.

5. The filling head (100) according to one of the preceding claims, wherein the dip tube (107) includes on an inner side thereof a spacer element (113) for creating a vent channel in the area of the vent opening (111).

6. The filling head (100) according to Claim 5, wherein the spacer element (113) is formed by a spacer rib (115) extending in the longitudinal direction of the dip tube (107).

7. The filling head (100) according to Claim 6, wherein the spacer rib (115) includes a stop (117) for a filling nozzle.

8. The filling head (100) according to Claim 7, wherein the stop (117) in the spacer rib (115) is situated below the vent opening (111) of the dip tube (107).

9. The filling head (100) according to one of the preceding claims, wherein the tank vent pipe (105) extends parallel to the dip tube (107).

10. The filling head (100) according to one of the preceding claims, wherein the tank vent pipe (105) is situated in the vicinity of the vent opening (111) of the dip tube (107).

11. The filling head (100) according to one of the preceding claims, wherein a surge wall (133) is formed in the first molded housing part (103-1), which is situated between an outlet (127) of the tank vent pipe (105) and the vent opening (111).

12. The filling head (100) according to Claim 1, wherein the dip tube (107) includes on an outer side thereof an opening (125) for attaching the modular annular surge element (119) to the dip tube (107).

13. The filling head (100) according to Claim 12, wherein the dip tube (107) includes on the outside thereof longitudinal ribs (121) for forming a stop for the fixed surge element (119).

14. The filling head (100) according to Claim 12 or 13, wherein the first molded housing part (103-1) includes on an inner side thereof at least one fixing element (123) for fixing the positioned annular surge element (119).

## Revendications

1. Tête de remplissage (100) pour un réservoir de liquide dans un moteur de véhicule ayant un boîtier (103), qui comprend:
une première partie du boîtier moulée (103-1), dans laquelle un tuyau de ventilation du réservoir (105) est formé pour introduire de l'air à l'intérieur du boîtier (103); et
une seconde partie du boîtier moulée (103-2), dans laquelle un tube plongeur (107) est formé pour guider un jet de liquide à l'intérieur de la tête de remplissage (100), dans laquelle le tube plongeur (107) comprend une ouverture d'évent (111) pour libérer depuis la tête de remplissage (100) l'air qui peut être introduit à travers le tuyau de ventilation du réservoir (105), **caractérisé en ce que** le tube plongeur (107) comprend un élément de pompage annulaire modulaire (119) qui peut être attaché au tube plongeur (107).

2. Tête de remplissage (100) selon la revendication 1, dans laquelle l'ouverture d'évent (111) du tube plongeur (107) est ou comprend une ouverture de section transversale circulaire.

3. Tête de remplissage (100) selon l'une quelconque des revendications précédentes, dans laquelle l'ouverture d'évent (111) du tube plongeur (107) est située au niveau d'une paroi supérieure du boîtier.

4. Tête de remplissage (100) selon l'une quelconque des revendications précédentes, dans laquelle le tube plongeur (107) est formé sous forme de cylindre.

5. Tête de remplissage (100) selon l'une quelconque des revendications précédentes, dans laquelle le tube plongeur (107) comprend sur un de ses côtés intérieurs un élément d'espacement (113) pour créer un canal d'évent au niveau de l'ouverture d'évent (111).

6. Tête de remplissage (100) selon la revendication 5, dans laquelle l'élément d'espacement (113) est formé par une nervure d'espacement (115) qui s'étend dans la direction longitudinale du tube plongeur (107).

7. Tête de remplissage (100) selon la revendication 6, dans laquelle la nervure d'espacement (115) comprend une butée (117) pour une buse de remplissage.

8. Tête de remplissage (100) selon la revendication 7, dans laquelle la butée (117) dans la nervure d'espacement (115) est située en dessous de l'ouverture d'évent (111) du tube plongeur (107).

9. Tête de remplissage (100) selon l'une quelconque des revendications précédentes, dans laquelle le tuyau de ventilation du réservoir (105) s'étend parallèlement au tube plongeur (107).

10. Tête de remplissage (100) selon l'une quelconque des revendications précédentes, dans laquelle le tuyau de ventilation du réservoir (105) est situé à proximité de l'ouverture d'évent (111) du tube plongeur (107).

11. Tête de remplissage (100) selon l'une quelconque des revendications précédentes, dans laquelle une paroi de pompage (133) est formée dans la première partie du boîtier moulée (103-1), qui est située entre une sortie (127) du tuyau de ventilation du réservoir (105) et l'ouverture d'évent (111).

12. Tête de remplissage (100) selon la revendication 1, dans laquelle le tube plongeur (107) comprend sur un de ses côtés extérieurs une ouverture (125) pour attacher l'élément de pompage annulaire modulaire (119) au tube plongeur (107).

13. Tête de remplissage (100) selon la revendication 12, dans laquelle le tube plongeur (107) comprend des nervures longitudinales sur son côté extérieur (121) pour former une butée pour l'élément de pompage fixé (119).

14. Tête de remplissage (100) selon la revendication 12 ou la revendication 13, dans laquelle la première partie du boîtier moulée (103-1) comprend sur un de ses côtés intérieurs au moins un élément de fixation (123) pour fixer l'élément de pompage annulaire positionné (119).
